# EUROPÄISCHE PATENTSCHRIFT

(11) **EP 1 212 650 B1**
(45) Veröffentlichungstag und Bekanntmachung des Hinweises auf die Patenterteilung: **26.02.2003**
(21) Anmeldenummer: 00947811.6
(22) Anmeldetag: 26.06.2000
(51) Int. Cl.: G02B 26/08

(54) **MIKROSCHWINGVORRICHTUNG**
MICROMECHANICAL OSCILLATING DEVICE
DISPOSITIF A MICRO-OSCILLATIONS

(30) Priorität: 28.08.1999 DE 19941045
(43) Veröffentlichungstag der Anmeldung: 12.06.2002
(73) Patentinhaber: ROBERT BOSCH GMBH, 70442 Stuttgart (DE)
(72) Erfinder: NIENDORF, Andreas, D-12527 Berlin (DE); FREY, Wilhelm, Mountain View CA 94041 (US); FUNK, Karsten, Palo Alto, CA 94304 (US)
(86) Internationale Anmeldenummer: DE0001992
(87) Internationale Veröffentlichungsnummer: WO01001187

(56) Entgegenhaltungen:
- EP-A- 0 754 958
- GB-A- 2 275 787
- US-A- 5 345 521
- PATENT ABSTRACTS OF JAPAN vol. 1999, no. 11, 30. September 1999 (1999-09-30) & JP 11 153761 A (SAMSUNG ELECTRON CO LTD), 8. Juni 1999 (1999-06-08)

## Beschreibung

Die Erfindung betrifft eine Mikroschwingvorrichtung, insbesondere einen Mikroschwingspiegel, nach der Gattung des Hauptanspruches.

### Stand der Technik

In Oberflächenmikromechanik hergestellte Mikroschwingspiegel mit unterschiedlichsten Formen von Federn und Aufhängungen sind vielfach bekannt. Dazu sei beispielsweise auf die Anmeldung DE 198 57 946.2 verwiesen. Derartige Spiegel werden insbesondere in der Innenraumsensierung von Kraftfahrzeugen, beim Scannen oder zur Laserablenkung eingesetzt.

Bekannte Mikroschwingspiegel, die üblicherweise mit Hilfe mikromechanischer Verfahren beispielsweise aus Silizium hergestellt werden, können jedoch vielfach nur mit relativ kleinen Stell- bzw. Torsionswinkeln betrieben werden. Um große Torsionswinkel zu erreichen, müssen die Federn, an denen die eigentliche Spiegelfläche an einem Tragkörper weitgehend freitragend aufgehängt ist, sehr dünn ausgeführt werden, da nur relativ kleine Antriebskräfte, beispielsweise zur Anregung einer Torsionsschwingung, zur Verfügung stehen.

Gerade bei gegenüber der Federdicke relativ großen Spiegelflächen führen jedoch von außen einwirkende Kräfte, die beispielsweise bei einem Stoß oder einem Aufprall auftreten, gelegentlich zu einer Zerstörung der Federn durch Bruch oder Abriß.

Aufgabe der Erfindung ist die Entwicklung eines neuartigen Designs für die Federn einer Mikroschwingvorrichtung, insbesondere eines Mikroschwingspiegels. Diese Federn sollen dabei einerseits die eigentliche Schwingfläche weitgehend freitragend mit einem Tragkörper verbinden und eine Torsionsschwingung der Schwingfläche ermöglichen, andererseits jedoch von außen insbesondere plötzlich einwirkende und zumindest teilweise senkrecht zur Schwingfläche gerichtete Kräfte derart aufnehmen und ablenken, daß ein Bruch der Federn vermieden wird.

### Vorteile der Erfindung

Die erfindungsgemäße Mikroschwingvorrichtung hat gegenüber dem Stand der Technik den Vorteil, daß durch die eingesetzten Federstrukturen die eigentlichen Torsionsfederelemente mechanisch, insbesondere hinsichtlich auftretender Biegespannungen entlastet werden. Damit ist es vorteilhaft möglich, die Torsionsfederelemente noch dünner als bisher auszuführen, so daß kleinere Kräfte erforderlich sind, um eine Torsionsschwingung der Schwingstruktur anzuregen. Weiterhin können mit diesen Kräften auch größere Stellwege bzw. Torsionswinkel erreicht werden. Daneben vermindert die erfindungsgemäße Mikroschwingvorrichtung die Belastung der Torsionsfederelemente auch während des Herstellungsprozesses, so daß bei der Produktion weniger Ausfälle entstehen.

Durch dünne Torsionsfederelemente verbunden mit kleineren anliegenden Kräften zur Anregung der Torsionsschwingung wird zudem vorteilhaft der Aufwand für die elektronische Steuerung der Mikroschwingvorrichtung vermindert. Gleichzeitig können aufgrund der erhöhten Robustheit der erfindungsgemäßen Mikroschwingvorrichtung auch die Fertigungstoleranzen beim Herstellungsprozeß vermindert werden, so daß einfachere und kostengünstigere Herstellungsverfahren eingesetzt werden können.

Die erfindungsgemäße Mikroschwingvorrichtung ist weiter insbesondere auch beim mobilen Einsatz robust, bei gleichzeitig einfacher Konstruktion und geringem Aufwand an Verbindungstechnik, was zu Kostenersparnis führt.

Schließlich sind in die Fertigung keinerlei,neuartige Herstellungsverfahren involviert, so daß vollständig auf bekannte Techniken zurückgegriffen werden kann. Überdies können die zusätzlich vorgesehenen Wandlerstrukturen im selben Prozeßschritt wie die Erzeugung der Schwingstruktur und der Torsionsfederelemente hergestellt werden.

Die größte mechanische Belastung der Federstruktur der erfindungsgemäßen Mikroschwingvorrichtung tritt im allgemeinen bei einem plötzlichen Stoß auf. Dabei wird die Stoßenergie und der Stoßimpuls im wesentlichen auf die Schwingstruktur übertragen. Durch die erfindungsgemäße Mikroschwingvorrichtung und insbesondere die eingesetzte Wandlerstruktur wird diese Energie, die in der Bewegung der Schwingstruktur gespeichert ist, vorteilhaft durch elastische Verformung der Federstruktur aufgenommen, wobei der übertragene Impuls gedämpft und die eigentlichen Torsionsfederelemente weitgehend nur noch einer im wesentlichen parallel zu der Torsionsachse gerichteten Zugspannung ausgesetzt sind, die nur sehr selten zu Abrissen oder Brüchen führt. Unerwünschte Biegespannungen, die im Stand der Technik vielfach zu Brüchen der Torsionsfederelemente führen, werden dagegen sehr vorteilhaft durch eine Wandlerstruktur aufgenommen, teilweise gedämpft und zumindest teilweise zu unkritischen Zug- bzw. Druckspannungen umgesetzt.

Insgesamt kann die erfindungsgemäße Mikroschwingvorrichtung somit deutlich höhere, auch kurzzeitige Kräfte aufnehmen und tolerieren. So wird durch eine Torsion der verwendeten Wandlerstrukturen die Biegespannung der Torsionsfederelemente insbesondere an den besonders wichtigen Übergangs- oder Verbindungsstellen erheblich vermindert, wobei die kritische Zugspannung für die Torsionsfederelemente deutlich höher als die kritische Biegespannung ist.

Weitere Vorteile und vorteilhafte Weiterbildungen der Erfindung ergeben sich aus den in den Unteransprüchen aufgeführten Maßnahmen.

So unterliegt die Form der eigentlichen Schwingungsstruktur kaum Beschränkungen hinsichtlich der Form.

Weiterhin kommen auch als Form für die Wandlerstruktur eine Vielzahl von Ausgestaltungen in Frage, die auf den Einzelfall ausgewählt oder optimiert werden müssen.

Besonders vorteilhaft ist weiterhin, wenn rechteckige oder winklige Übergänge oder Strukturen der Wandlerstrukturen oder allgemein der Federstrukturen verrundet ausgebildet sind, da dies zu einer zusätzlichen Stabilitätserhöhung führt. Daneben ist vorteilhaft ohne weiteres möglich, daß sich eine zwischen Torsionsfederelement und Tragkörper angebrachte erste Wandlerstruktur in ihrem Design von einer zwischen Torsionsfederelement und Schwingstruktur angebrachten zweite Wandlerstruktur unterscheidet. Dies gilt in gleicher Weise auch für den Fall, daß mehrere Federstrukturen die Schwingstruktur mit dem Tragkörper verbinden. Auch die Federstrukturen können dann ein unterschiedliches Design aufweisen. Unter Design ist dabei sowohl die Form der jeweiligen Struktur als auch das eingesetzte Material und die jeweilige Materialstärke zu verstehen.

Schließlich ist es vorteilhaft, wenn bei der erfindungsgemäßen Mikroschwingvorrichtung zusätzlich Anschlagsstrukturen vorgesehen sind, die eine über die Torsionsschwingung hinausgehende örtliche Verrückung der Schwingstruktur aus der Ruhelage parallel und/oder senkrecht zu der Richtung der Torsionsachse auf Maximalwerte beschränken. Damit können sehr vorteilhaft die Obergrenzen bzw. kritische Maximalwerte von Dehnungen oder Verbiegungen der Torsionsfederelemente oder der Wandlerstruktur vorgegeben werden, um damit zusätzlich Brüche bzw. Abrisse zu vermeiden.

Dabei ist es weiter vorteilhaft, wenn diese Anschlagsstrukturen selbst ebenfalls federnd ausgebildet sind, so daß sie in der Lage sind, eine über die Torsionsschwingung hinausgehende örtliche Verrückung der Schwingstruktur aus der Ruhelage parallel und/oder senkrecht zu der Richtung der Torsionsachse abzufedern oder zu dämpfen. Damit wird ein zusätzlicher Schutz vor Abriß oder Bruch bei kritischen Belastungen erzielt.

### Zeichnungen

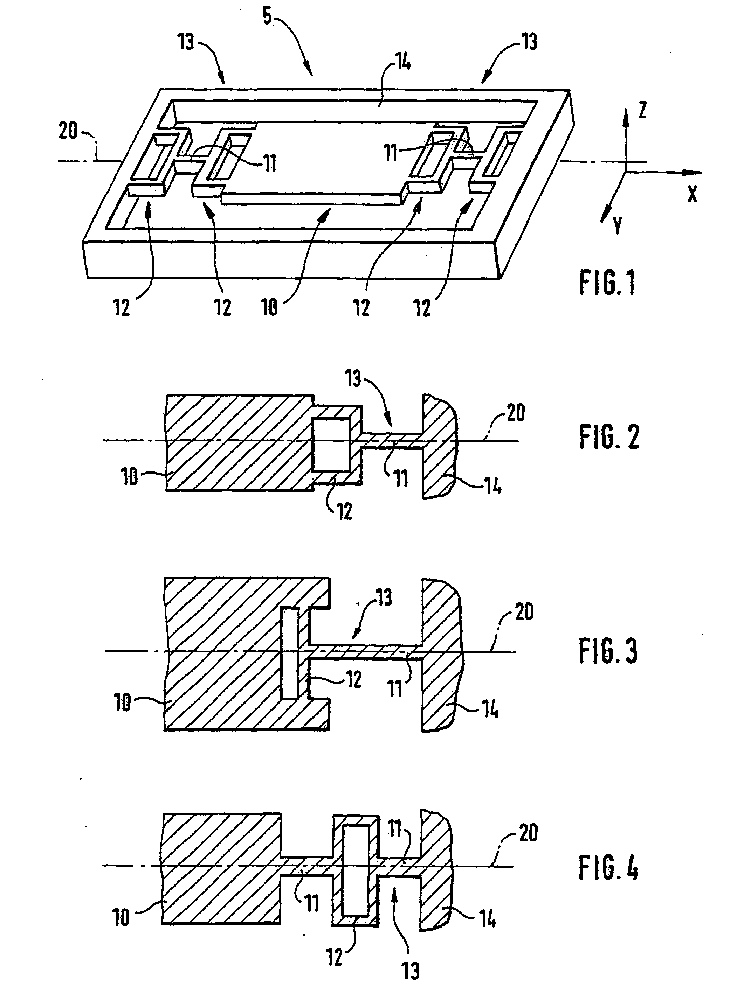

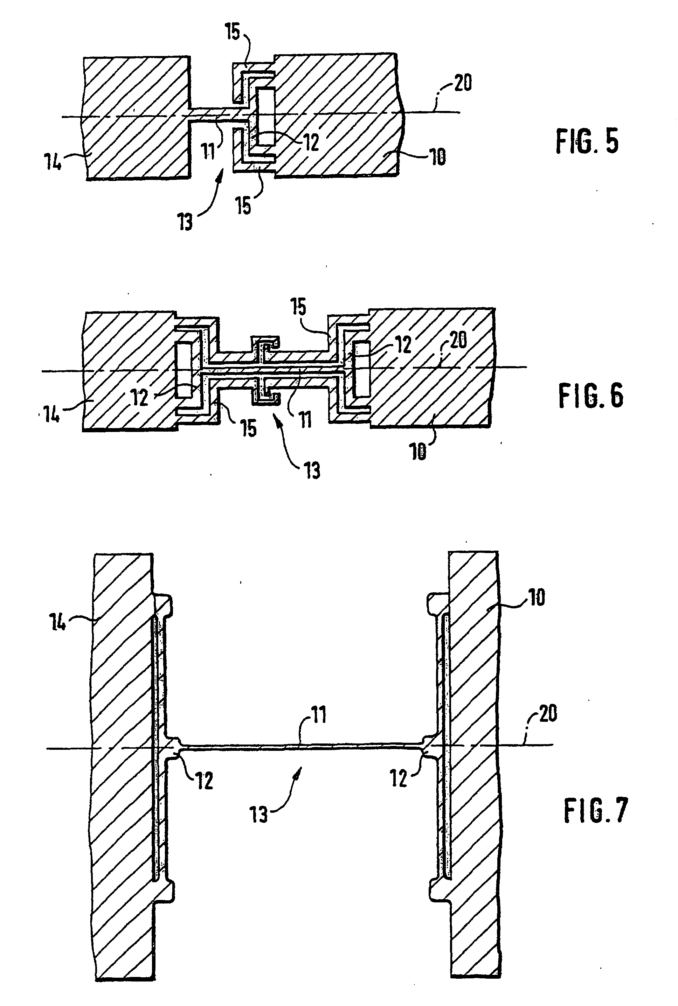

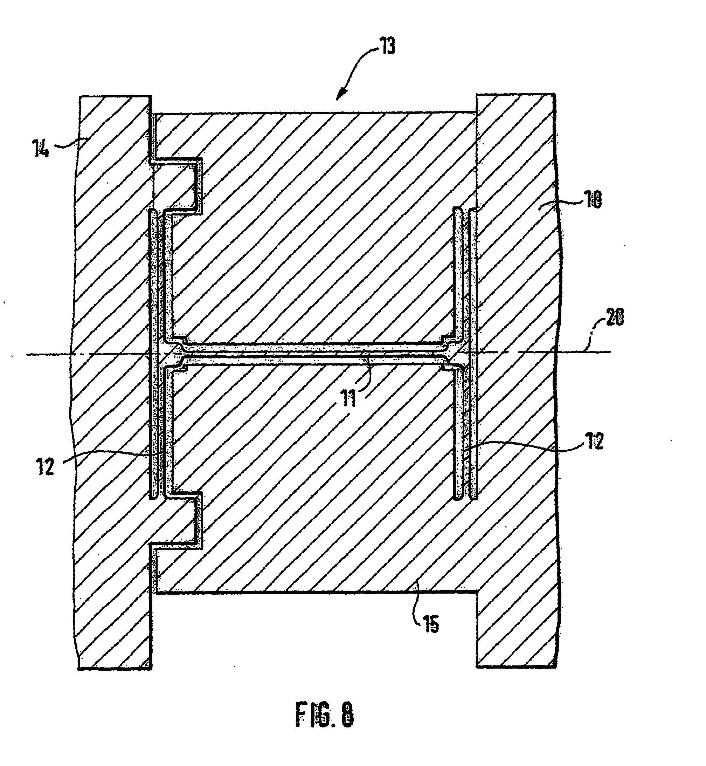

Ausführungsbeispiele der Erfindung werden anhand der Zeichnungen und in der nachfolgenden Beschreibung näher erläutert. Es zeigen Figur 1 eine Prinzipskizze einer Mikroschwingvorrichtung in Form eines Mikroschwingspiegels, Figur 2 und Figur 4 einen Ausschnitt aus Figur 1 mit einer jeweils modifizierten Federstruktur, Figur 3 eine Modifikation von Figur 1 mit einer modifizierten Federstruktur und einer modifizierten Schwingstruktur, Figur 5 eine Modifikation von Figur 2 mit einer zusätzlichen Anschlagsstruktur und Figur 6 eine Modifikation von Figur 1 mit zusätzlichen Anschlagsstrukturen. Die Figur 7 zeigt eine der in Figur 1 als Prinzipskizze dargestellten Federstrukturen in realistischen Größenverhältnissen. In Figur 8 ist, ausgehend von Figur 7, zusätzlich eine Anschlagsstruktur vorgesehen.

### Ausführungsbeispiele

Die Figur 1 zeigt eine Mikroschwingvorrichtung 5, die als Mikroschwingspiegel ausgebildet ist, mit einer Schwingstruktur 10 aus einer rechteckigen ebenen Platte, die weitgehend freitragend mit einem die Schwingstruktur 10 umgebenden Tragkörper 14 über zwei einander gegenüberliegende, gleichartige Federstrukturen 13 verbunden ist. Die Federstrukturen 13 weisen jeweils ein Torsionsfederelement 11 auf, das an seinen beiden Enden jeweils mit einer Wandlerstruktur 12 verbunden ist, die die Form eines Griffes hat. Die Wandlerstrukturen 12 sind dabei weiter entweder direkt mit dem Tragkörper 14 oder direkt mit der Schwingstruktur 10 verbunden.

Die Torsionsfederelemente 11 sind im erläuterten Beispiel weiter derart einander gegenüber angeordnet, daß sie auf einer gemeinsamen Achse liegen, die eine Torsionsachse 20 definiert, wobei die Schwingstruktur 10 zu einer Torsionsschwingung um diese Torsionsachse 20 anregbar ist. Die Torsionsachse 20 liegt parallel zu der eingezeichneten x-Richtung. Die Schwingstruktur 10 hat beispielsweise eine Abmessung von 4000 µm Breite, 4000 µm Länge und 50 µm Dicke, die Torsionsfederelemente 11 sind beispielsweise 5 µm bis 15 µm breit, 300 µm bis 1000 µm lang und ca. 50 µm dick. Im mit Hilfe der Figur 7 erläuterten Beispiel beträgt die Länge des Torsionsfederelementes 600 µm bei einer Breite von 10 µm.

Weiterhin weisen die Wandlerstrukturen 12 eine typische Dicke von 50 µm bei einer Breite der die Wandlerstrukturen 12 bildenden Stege von 10 µm bis 50 µm und einer Länge von 100 µm bis 1000 µm auf. Im mit Hilfe der Figur 7 erläuterten Beispiel beträgt die Länge der Wandlerstruktur ca. 600 µm und die Breite der Stege ca. 15 µm.

Im übrigen sind die Eck- und Übergangsbereiche, d.h. die Bereiche in den die Wandlerstrukturen 12 mit dem Tragkörper 14, der Schwingstruktur 14 oder dem Torsionsfederelement 11 in Verbindung stehen, bevorzugt verrundet und verbreitert ausgeführt, um damit eine zusätzliche Stabilitätserhöhung zu erzielen.

Die Mikroschwingvorrichtung 5 ist weiterhin aus Silizium, einer Siliziumverbindung oder anderen, an sich bekannten, mikrostrukturierbaren Materialien hergestellt und über an sich bekannte, mikromechanische Strukturierungsverfahren erzeugt. Weiterhin sind zum Betrieb der Mikroschwingvorrichtung 5 nicht dargestellte, an sich bekannte Mittel, beispielsweise Elektroden, Piezoaktoren oder magnetische Aktroren, vorgesehen, die sich unterhalb der Schwingstruktur 10 befinden oder auf der Oberfläche der Federstrukturen 13 und/oder der Oberfläche der Schwingstruktur 10 verlaufen, und über elektrostatisch oder mechanisch induzierte Kräfte eine Torsionsschwingung der Schwingstruktur 10 um die Torsionsachse 20 hervorrufen, wobei der Torsionswinkel typischerweise ± 10° beträgt. Daneben sind weitere, ebenfalls nicht dargestellt und an sich bekannte elektronische Bauteile wie Anschlußkontakte, Leiterbahnen und eine Auswerte- und Steuerelektronik vorgesehen.

Bei Betrieb der Mikroschwingvorrichtung 5 werden die Torsionsfederelemente 11 im Fall einer Torsionsschwingung um die Torsionsachse 20 auf Torsion belastet, wobei sich die Schwingstruktur 10 um die Torsionsachse 20 dreht. Treten jedoch beispielsweise infolge eines Stoßes oder Sturzes insbesondere kurzzeitige, äußere Kräfte auf, die auf die Mikroschwingvorrichtung 5 beispielsweise in positive oder negative z-Richtung, d.h. zumindest teilweise senkrecht zu der Torsionsachse 20 einwirken, verursachen diese eine Verbiegung oder Torsion der Wandlerstrukturen 12, so daß die Torsionsfederelemente 11 nur einer deutlich verringerten Biegespannung in z-Richtung ausgesetzt sind. Stattdessen tritt nun durch die Verbiegung der Wandlerstrukturen 12 eine Zugspannung in den Torsionsfederelementen 11 auf.

Durch die Wandlerstrukturen 12 wird also bei kurzzeitiger Überlastung oder Spitzenbelastung eine auf die Torsionsfederelemente 11 wirkende Biegespannung in eine zumindest weitgehend parallel zu der Torsionsachse 20 gerichtete Spannung gewandelt. Damit wird ein Bruch oder Abriß der Torsionsfederelemente 11 vermieden.

Im übrigen werden auch die Wandlerstrukturen 12 bei Torsion und Verbiegung durch eine äußere Kraft in z-Richtung im wesentlichen auf Zug belastet.

Läßt man dagegen die Wandlerstrukturen 12 fort, so daß die Torsionselemente 11, wie aus dem Stand der Technik bekannt, jeweils direkt mit der Schwingstruktur 10 bzw. dem Tragkörper 14 verbunden sind, tritt an den Enden der Torsionselemente 11 bei Einwirken der äußeren Kraft in z-Richtung eine maximale Biegespannung auf, die nicht kompensiert werden kann, was bei überkritischen Kräften an diesen Stellen vielfach zum Bruch führt.

Wesentlich ist für das erläuterte Ausführungsbeispiel gemäß Figur 1 somit die Wandlung unerwünschter, kritischer Biegespannungen, die zumindest teilweise senkrecht zu der Richtung einer Torsionsachse gerichtet sind, in tolerierbare, zumindest im wesentlichen parallel zu einer Torsionsachse 20 gerichtete Zug- oder Druckspannungen.

Dabei ist zu betonen, daß die Wandlerstruktur 12 dazu auch derart ausgebildet sein kann, daß die Torsionselemente 11 im wesentlichen nicht auf Zug, sondern auf Druck belastet werden.

Weiter ist anzumerken, daß es in Figur 1 nicht zwingend ist, zwei einander gegenüberliegende Torsionsfederelemente 11 bzw. zwei Federstrukturen 13 vorzusehen. Prinzipiell genügt auch ein Federelement 13, das die Schwingstruktur 10 freitragend mit dem Tragkörper 14 verbindet und diese trägt. In diesem Fall definiert die Richtung bzw. Geometrie des Torsionsfederelementes 11 die Torsionsachse 20. Weiterhin können in Figur 1 auch vier, jeweils um 90° gegeneinander versetzte, sich paarweise gegenüberliegende Federstrukturen 13 vorgesehen sein, so daß zwei zueinander senkrechte Torsionsachsen 20 entstehen, und die Schwingstruktur 10 bei Anregung von unabhängig voneinander gesteuerten Torsionsschwingungen um diese Torsionsachsen 20 Bahnkurven beschreibt, die einer Lissajou-Figur entsprechen.

Die Figur 2 zeigt als zweites Ausführungsbeispiel einen Ausschnitt aus Figur 1. Dieser Ausschnitt erfaßt nur eine Federstruktur 13, die gegenüber der Figur 1 modifiziert wurde. Im einzelnen weist dabei gemäß Figur 2 jede Federstruktur 13 nur eine Wandlerstruktur 12 auf. Diese kann, wie skizziert, einseitig direkt mit der Schwingstruktur 10, und andererseits direkt mit dem Torsionsfederelement 11 verbunden sein, das selbst wiederum direkt mit dem Tragkörper 14 verbunden ist. Es ist jedoch ebenso möglich, die Rolle von Schwingstruktur 10 und Tragkörper 14 in Figur 2 zu vertauschen.

Die Figur 3 zeigt ein weiteres Ausführungsbeispiel in Abwandlung von Figur 1, wobei in diesem Fall eine Ausnehmung in der Schwingstruktur 10 vorgesehen ist, in die die Wandlerstruktur 12 eingelassen ist. Durch diese Konstruktion spart man gegenüber der Lösung gemäß Figur 2 den zusätzlich erforderlichen Platz für die Wandlerstruktur 12. Dies kann Vorteile hinsichtlich der Waferausbeute haben. Außerdem kann damit auch das Torsionsfederelement 11 platzsparend verlängert werden. Auch in Figur 3 kann im übrigen die Rolle von Schwingstruktur 10 und Tragkörper 14 auch vertauscht sein, d.h. die Wandlerstruktur 12 ist in eine Ausnehmung im Tragkörper 14 eingelassen.

Die Figur 4 zeigt ein weiteres Ausführungsbeispiel in Abwandlung von Figur 1, wobei als Wandlerstruktur 12 eine geschlossene Hohlkontur vorgesehen ist, die einen rechteckigem Umfangsverlauf aufweist. Diese Hohlkontur erhöht zwar die zulässigen äußeren Kräfte und damit die Belastungsfähigkeit der Mikroschwingvorrichtung 5 nicht so stark, wie die Konstruktionen gemäß Figur 1 bis 3, sie bietet jedoch die zusätzliche Möglichkeit, über die Wandlerstruktur 12 Antriebskräfte zur Anregung der Torsionsschwingung in die Schwingstruktur 10 einzukoppeln.

Die Figur 5 zeigt als weiteres Ausführungsbeispiel eine Weiterführung der Ausgestaltung gemäß Figur 2, wobei zusätzlich eine Anschlagsstruktur 15 vorgesehen ist, die beispielsweise aus dem gleichen Material wie die Federstruktur 13 besteht, und an zwei Stellen direkt mit der Schwingstruktur 10 verbunden ist, während das Torsionsfederelement 11 direkt mit dem Tragkörper 14 verbunden ist. Die Anschlagsstruktur 15 kann dabei selbst auch federnd ausgebildet sein. In Figur 5 ist sie jedoch als starre Anschlagsstruktur 15 ausgeführt. Auch in Figur 5 können übrigens offensichtlich die Rollen des Tragkörpers 14 und der Schwingstruktur 10 vertauscht sein.

Die Anschlagsstruktur 15 bewirkt, daß eine über die erwünschte Torsionsschwingung hinausgehende örtliche, beispielsweise durch Stoß verursachte Verrückung der Schwingstruktur 10 aus der Ruhelage parallel (x-Richtung) und senkrecht (y-Richtung) zu der Richtung der Torsionsachse 20 auf unterkritische Maximalwerte beschränkt wird. Somit wird zusätzlich zu der Funktion der Wandlerstruktur 12 auch damit eine Bruch- oder Überlastungsgefahr vermieden. Durch die federnde oder starre Ausgestaltung der Anschlagstruktur 15, die im übrigen bevorzugt etwas dicker ist, als Federstruktur 13, wird im übrigen die Überlastung der Torsionsfederelemente 11 vermieden, ohne deren Funktion zu beeinträchtigen.

Weiter bewirkt die Anschlagsstruktur 15, daß bei einer Kraft in z-Richtung, durch die das Torsionsfederelement 11 auf Zug und die Wandlerstruktur 12 auf Biegung belastet wird, diese Durchbiegung der Wanderstruktur 13 begrenzt und damit die Wandlerstruktur 13 entlastet wird. Somit ergibt sich eine Gesamtbelastung die neben der Zugbelastung des Torsionsfederelementes 11 vorteilhaft im wesentlichen nur noch die Anschlagsstruktur 15 betrifft.

Die Figur 6 zeigt schließlich in Weiterführung der Figur 1 eine Variante zum vollständigen Schutz einer Federstruktur 13 durch entsprechend angebrachte Anschlagsstrukturen 15.

In den Figuren 1 bis 6 kann im übrigen durch Verrundung von rechteckigen oder winkligen Übergänge oder Strukturen der Wandlerstrukturen 12 und/oder der Anschlagsstrukturen 15 eine zusätzliche Stabilitätserhöhung erzielt werden.

Weiterhin kann auch die Art des Anschlusses bzw. der Verbindung der Federstrukturen 13 mit dem Tragkörper 15 je nach verwendeter Technologie und Festigkeitsvorgaben, beispielsweise hinsichtlich der Form, unterschiedlich sein von Art der Verbindung der Federstrukturen 13 mit der Schwingstruktur 10.

Die Figur 7 zeigt eine der in Figur 1 als Prinzipskizze dargestellten Federstrukturen 13 in realistischen Größenverhältnissen.

In Figur 8 ist zusätzlich in Weiterführung der Ausgestaltung gemäß Figur 7 eine Federstruktur 13 mit einer Anschlagsstruktur 15 in einer weiteren Ausführungsvariante vorgesehen, die dort beispielhaft fest mit der Schwingstruktur 10 verbunden ist.

### Bezugszeichenliste

- 5: Mikroschwingvorrichtung

- 10: Schwingstruktur
- 11: Torsionsfederelement
- 12: Wandlerstruktur
- 13: Federstruktur
- 14: Tragkörper
- 15: Anschlagsstruktur

- 20: Torsionsachse

## Patentansprüche

1. Mikroschwingvorrichtung, insbesondere Mikroschwingspiegel, mit einer Schwingstruktur (10), die über mindestens eine Federstruktur (13) mit einem Tragkörper (14) zumindest weitgehend freitragend verbunden ist, wobei die Federstruktur (13) mindestens ein, eine Torsionsachse (20) definierendes Torsionsfederelement (11) aufweist, und wobei eine Torsionsschwingung der Schwingstruktur (10) um die Torsionsachse (20) anregbar ist, **dadurch gekennzeichnet, daß** die Federstruktur (13) mindestens eine Wandlerstruktur (12) aufweist, die zumindest weitgehend senkrecht zu der Torsionsachse (20) auf das Torsionsfederelement (11) einwirkende äußere Kräfte zumindest teilweise in parallel zu der Torsionsachse (20) auf das Torsionsfederelement (11) einwirkende Kräfte wandelt.

2. Mikroschwingvorrichtung nach Anspruch 1, **dadurch gekennzeichnet, daß** die Wandlerstruktur (12) derart ausgestaltet ist, daß sie die einwirkenden äußeren Kräfte zumindest teilweise in auf das Torsionsfederelement (11) einwirkende Zugkräfte wandelt.

3. Mikroschwingvorrichtung nach Anspruch 1, **dadurch gekennzeichnet, daß** die Federstruktur (13), die Schwingstruktur (10) und der Tragkörper (14) aus Silizium oder einer Siliziumverbindung bestehen.

4. Mikroschwingvorrichtung nach Anspruch 1, **dadurch gekennzeichnet, daß** die Wandlerstruktur (12) mit mindestens einem Torsionsfederelement (11) direkt verbunden ist.

5. Mikroschwingvorrichtung nach Anspruch 1, **dadurch gekennzeichnet, daß** die Wandlerstruktur (12) einerseits direkt mit der Schwingstruktur (10) oder dem Tragkörper (14) und andererseits direkt mit dem Torsionsfederelement (11) verbunden ist.

6. Mikroschwingvorrichtung nach Anspruch 1, **dadurch gekennzeichnet, daß** die Wandlerstruktur (12) lediglich mit Torsionsfederelementen (11) direkt verbunden ist.

7. Mikroschwingvorrichtung nach Anspruch 1, **dadurch gekennzeichnet, daß** nur eine Federstruktur (13) zwei auf einer Torsionsachse (20) liegende Federstrukturen (13) oder vier auf zwei zueinander senkrecht stehenden Torsionsachsen (20) liegende Federstrukturen (13) vorgesehen sind.

8. Mikroschwingvorrichtung nach Anspruch 1, **dadurch gekennzeichnet, daß** die Schwingstruktur (10) eine weitgehend freitragend federnd gelagerte Masse oder eine planare Platte mit insbesondere rechteckiger, quadratischer, kreisförmiger oder ellipsoidförmiger Grundfläche ist, oder daß die Schwingstruktur (10) hohlspiegelförmig ausgebildet ist.

9. Mikroschwingvorrichtung nach Anspruch 1, **dadurch gekennzeichnet, daß** Mittel vorgesehen sind, um die Torsionsschwingung der Schwingstruktur (10) anzuregen.

10. Mikroschwingvorrichtung nach Anspruch 1, **dadurch gekennzeichnet, daß** die Wandlerstruktur (12) bügelförmig, bogenförmig, grifförmig oder halbkreisförmig ausgebildet ist, oder daß die Wandlerstruktur (12) eine geschlossene Hohlkontur ist, die einen insbesondere ringförmigem, ellipsoidförmigem oder rechteckigem Umfangsverlauf aufweist.

11. Mikroschwingvorrichtung nach mindestens einem der vorangehenden Ansprüche, **dadurch gekennzeichnet, daß** mindestens eine insbesondere federnde oder starre Anschlagsstruktur (15) vorgesehen ist, die eine über die Torsionsschwingung hinausgehende örtliche Verrückung der Schwingstruktur (10) aus der Ruhelage parallel und/oder senkrecht zu der Richtung der Torsionsachse (20) auf Maximalwerte beschränkt.

12. Mikroschwingvorrichtung nach Anspruch 11, **dadurch gekennzeichnet, daß** die Anschlagsstruktur (15) mit der Schwingstruktur (10) oder dem Tragkörper (14) verbunden ist.

## Claims

1. Micro-oscillation device, in particular micro-oscillation mirror, with an oscillation structure (10) which is connected in an at least largely unsupported manner to a carrying body (14) via at least one spring structure (13), the spring structure (13) having at least one torsion-spring element (11) defining a torsion axis (20), and a torsional oscillation of the oscillation structure (10) about the torsion axis (20) being capable of being excited, **characterized in that** the spring structure (13) has at least one converter structure (12) which at least partially converts external forces acting on the torsion-spring element (11) at least largely perpendicularly to the torsion axis (20) into forces acting on the torsion-spring element (11) parallel to the torsion axis (20).

2. Micro-oscillation device according to Claim 1, **characterized in that** the converter structure (12) is designed in such a way that it at least partially converts the acting external forces into tensile forces acting on the torsion-spring element (11).

3. Micro-oscillation device according to Claim 1, **characterized in that** the spring structure (13), the oscillation structure (10) and the carrying body (14) consist of silicon or of a silicon compound.

4. Micro-oscillation device according to Claim 1, **characterized in that** the converter structure (12) is connected directly to at least one torsion-spring element (11).

5. Micro-oscillation device according to Claim 1, **characterized in that** the converter structure (12) is connected, on the one hand, directly to the oscillation structure (10) or the carrying body (14) and, on the other hand, directly to the torsion-spring element (11).

6. Micro-oscillation device according to Claim 1, **characterized in that** the converter structure (12) is connected directly to a torsion-spring element (11) only.

7. Micro-oscillation device according to Claim 1, **characterized in that** only one spring structure (13), two spring structures (13) lying on one torsion axis (20) or four spring structures (13) lying on two torsion axes (20) perpendicular to one another are provided.

8. Micro-oscillation device according to Claim 1, **characterized in that** the oscillation structure (10) is a mass resiliently mounted in a largely unsupported manner or a planar plate with an, in particular, rectangular, square, circular or ellipsoidal base area, or **in that** the oscillation structure (10) is designed in the form of a concave mirror.

9. Micro-oscillation device according to Claim 1, **characterized in that** means are provided for exciting the torsional oscillation of the oscillation structure (10).

10. Micro-oscillation device according to Claim 1, **characterized in that** the converter structure (12) is of stirrup-shaped, arcuate, grip-shaped or semicircular design, or **in that** the converter structure (12) is a closed hollow contour which has an, in particular, annular, ellipsoidal or rectangular circumferential profile.

11. Micro-oscillation device according to at least one of the preceding claims, **characterized in that** at least one, in particular, resilient or rigid stop structure (15) is provided, which restricts to maximum values a local displacement, exceeding the torsional oscillation, of the oscillation structure (10) out of the position of rest parallel and/or perpendicularly to the direction of the torsion axis (20).

12. Micro-oscillation device according to Claim 11, **characterized in that** the stop structure (15) is connected to the oscillation structure (10) or to the carrying body (14).

## Revendications

1. Dispositif à micro-oscillations notamment miroir à micro-oscillations comprenant une structure oscillante (10) reliée par au moins une structure de ressort (13) à un corps de support (14) d'une manière très largement autoportante, la structure de ressort (13) comporte au moins un élément de ressort de torsion (11) qui définit un axe de torsion (20), l'oscillation de torsion de la structure oscillante (10) pouvant être excitée autour de l'axe de torsion (20),
**caractérisé en ce que**
la structure de ressort (13) comporte au moins une structure de convertisseur (12) qui transforme les forces extérieures agissant au moins dans une très large mesure, perpendiculairement à l'axe de torsion (20) sur l'élément de torsion (11), au moins en partie en forces agissant parallèlement à l'axe de torsion (20) sur l'élément de ressort de torsion (11).

2. Dispositif à micro-oscillations selon la revendication 1,
**caractérisé en ce que**
la structure de convertisseur (12) est réalisée pour convertir les forces extérieures au moins en partie en des forces de traction agissant sur l'élément de ressort de torsion (11).

3. Dispositif à micro-oscillations selon la revendication 1,
**caractérisé en ce que**
la structure de ressort (13), la structure oscillante (10) et le corps de support (14) sont en silicium ou en une combinaison de silicium.

4. Dispositif à micro-oscillations selon la revendication 1,
**caractérisé en ce que**
la structure de convertisseur (12) est reliée directement à au moins un élément de ressort de torsion (11).

5. Dispositif à micro-oscillations selon la revendication 1,
**caractérisé en ce que**
la structure de convertisseur (12) est d'une part reliée directement à la structure oscillante (10) ou au corps de support (14) et d'autre part directement à l'élément de ressort de torsion (11).

6. Dispositif à micro-oscillations selon la revendication 1,
**caractérisé en ce que**
la structure de convertisseur (12) est reliée directement uniquement aux éléments de ressort de torsion (11).

7. Dispositif à micro-oscillations selon la revendication 1,
**caractérisé en ce qu'**
on prévoit seulement une structure de ressort (13), ou deux structures de ressort (13) situées sur un axe de torsion (20), ou quatre structures de ressort (13), sur deux axes de torsion (20) perpendiculaires l'un à l'autre.

8. Dispositif à micro-oscillations selon la revendication 1,
**caractérisé en ce que**
la structure oscillante (10) est une masse montée élastiquement, très largement de manière autoportante ou une plaque plane avec notamment une surface de base rectangulaire, carrée, circulaire ou elliptique, ou la structure oscillante (10) est en forme de miroir concave.

9. Dispositif à micro-oscillations selon la revendication 1,
**caractérisé par**
des moyens pour exciter l'oscillation de torsion ou de la structure oscillante (10).

10. Dispositif à micro-oscillations selon la revendication 1,
**caractérisé en ce que**
la structure de convertisseur (12) est en forme d'arceau, d'arc, de poignée ou de demi-cercle ; ou
la structure de convertisseur (12) est un contour creux fermé ayant un profil de circulation notamment annulaire, ellipsoïdal ou rectangulaire.

11. Dispositif à micro-oscillations selon au moins l'une des revendications précédentes,
**caractérisé en ce qu'**
au moins une structure de butée élastique (15) ou rigide limite à une valeur maximale un déplacement local de la structure oscillante (10) dépassant l'oscillation de torsion à partir de la position de repos, parallèlement et/ou perpendiculairement à la direction de l'axe de rotation (20).

12. Dispositif à micro-oscillations selon la revendication 11,
**caractérisé en ce que**
la structure de butée (15) est reliée à la structure oscillante (10) sur un corps de support (14).
